Europäisches Patentamt

European Patent Office

Office européen des brevets

(11) Publication number: **0 256 014**

**B1**

(12) **EUROPEAN PATENT SPECIFICATION**

(45) Date of publication of patent specification: **27.12.90**

(51) Int. Cl.⁵: **B 04 C 5/04, B 04 C 5/12, B 04 C 5/28, B 04 C 7/00**

(21) Application number: **86902773.0**

(22) Date of filing: **23.04.86**

(86) International application number:
**PCT/AU86/00111**

(87) International publication number:
**WO 86/06301 06.11.86 Gazette 86/24**

(54) SYSTEM AND APPARATUS FOR THE SEPARATION OF MULTI-PHASE MIXTURES.

(30) Priority: **23.04.85 AU 274/85**

(43) Date of publication of application:
**24.02.88 Bulletin 88/08**

(45) Publication of the grant of the patent:
**27.12.90 Bulletin 90/52**

(84) Designated Contracting States:
**AT BE CH DE FR IT LI LU NL SE**

(56) References cited:
| | |
|---|---|
| EP-A- 109 764 | AU-B-6 094 373 |
| AU-B- 109 051 | GB-A- 466 983 |
| AU-B- 284 951 | GB-A-2 136 327 |
| AU-B- 564 861 | US-A-2 439 850 |
| AU-B- 729 652 | US-A-2 668 620 |
| AU-B-1 264 047 | US-A-2 862 571 |
| AU-B-1 418 647 | US-A-2 956 679 |
| AU-B-2 039 870 | US-A-3 371 794 |
| AU-B-2 417 929 | US-A-3 543 931 |
| AU-B-2 994 577 | US-A-3 940 331 |
| AU-B-5 398 259 | |

(73) Proprietor: **CONOCO SPECIALTY PRODUCTS INC.**
**600 North Dairy Ashford**
**Houston Texas 77079 (US)**

(72) Inventor: **WEBB, David, Andrew**
**4 Simla Court**
**Heathmont, VIC 3135 (AU)**

(74) Representative: **Day, Jeremy John et al**
**REDDIE & GROSE 16 Theobalds Road**
**London, WC1X 8PL (GB)**

Courier Press, Leamington Spa, England.

## Description

This invention relates generally to the separation of multiphase mixtures and more particularly though not exclusively, to the separation of oil/water mixtures.

It is an object of the present invention to provide an improved system and apparatus for use in the system which is more efficient and more compact than the prior art devices.

GB—A—2136327 discloses a multiple hydrocyclone apparatus for separating a liquid containing fine solid particles into two or more fractions according to particle size distribution which comprises a cyclone separating means located within a casing and comprising a plurality of separating chambers, the casing having a cavity therein, an intake port through which, in use, the liquid to be separated is fed to the apparatus and outlet ports for more dense and less dense components of the liquid. The denser component is discharged into a cavity at one end of the casing and the less dense component is discharged into a cavity at the other end of the casing and discharged from the casing through the respective outlet ports.

According to the present invention there is provided apparatus for separating multi-phase liquid mixtures or at least partially separating a more dense liquid component of the mixture from a less dense liquid component thereof, comprising an outer casing having a cavity therein, an intake port through which, in use, the mixture is fed to the apparatus, a first outlet port from which the less dense liquid component can be discharged from the apparatus and a second outlet port from which the more dense liquid component can be discharged from the apparatus, the apparatus further including a cyclone separating means located within said casing and which comprises a plurality of separating chambers, each chamber having a primary portion which has a greater cross-sectional dimension at one end than at its other end and comprising a tangential inlet, an overflow outlet at said one end of the separating chamber of greater cross sectional dimension and an under flow outlet at the other end, a block-like element extending transversely across the casing in sealing relationship with the wall thereof to define the cavity, the underflow outlets of the separating chambers communicating with the cavity so that the more dense component of the mixture can pass into the cavity to be discharged through the second outlet port, and the over flow outlet from each separator chamber leading to an overflow outlet passage formed in said block-like element and thence to the first outlet port, said overflow outlet passage being located in a position between the intake port and the second outlet port.

Preferably the outer casing comprises an elongated tubular member having its ends closed by plugs or caps.

Preferably the intake port is disposed above the block-like element, the first outlet port is disposed adjacent the block-like element and the second outlet port is spaced from and below the block-like element.

Preferably the apparatus includes a head portion operatively connected to each separating chamber and defining the inlet and the overflow outlet for each separating chamber and having a passage or passages leading from the overflow outlet of each separating chamber to the overflow outlet passage.

Preferably, the head portion comprises a major inlet passage in fluid communication with the intake port. The head portion may comprise a second block-like element having the major inlet passage formed therein and a series of tangentially directed feed inlets associated therewith which feed the mixture to respective primary portions of the separating chamber.

Preferably, four separating chambers are provided, each having a feed inlet which is of involute form.

The head portion includes outlet passages communicating with the outlet passage or passages within the block-like element for conveying the less dense component through the first outlet port. The outlet passage(s) may include a peripheral groove in the outer surface of the block-like element which communicates with the first outlet port, the groove being disposed near the end of the block-like element adjacent the separating chambers.

The block-like element may further have a tapered forward end which is adapted to seat on a complementary tapered portion on the outer casing, the groove being provided on this tapered portion.

According to another aspect of the present invention there is provided a system for separating multi-phase mixtures comprising an input line through which the multi-phase mixture is delivered, an output line through which at least one of the separated phases of the mixture is discharged and a plurality of apparatus as defined above arranged in parallel between the input and output lines, valve means being provided so that each apparatus can be selectively operable or inoperable.

Preferred embodiments of the invention will hereinafter be described with reference to the accompanying drawings and in those drawings:

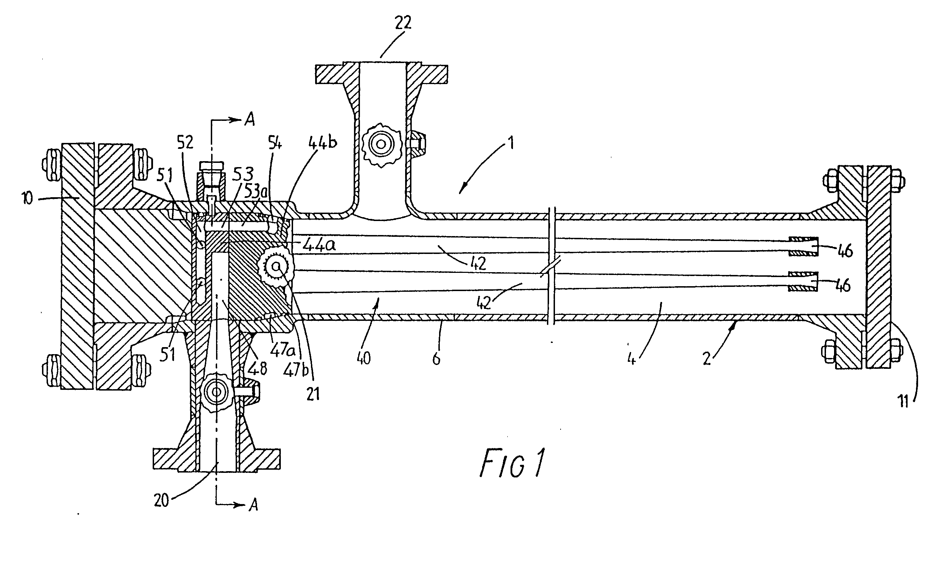

Figure 1 is a sectional side elevation of the apparatus according to the present invention;

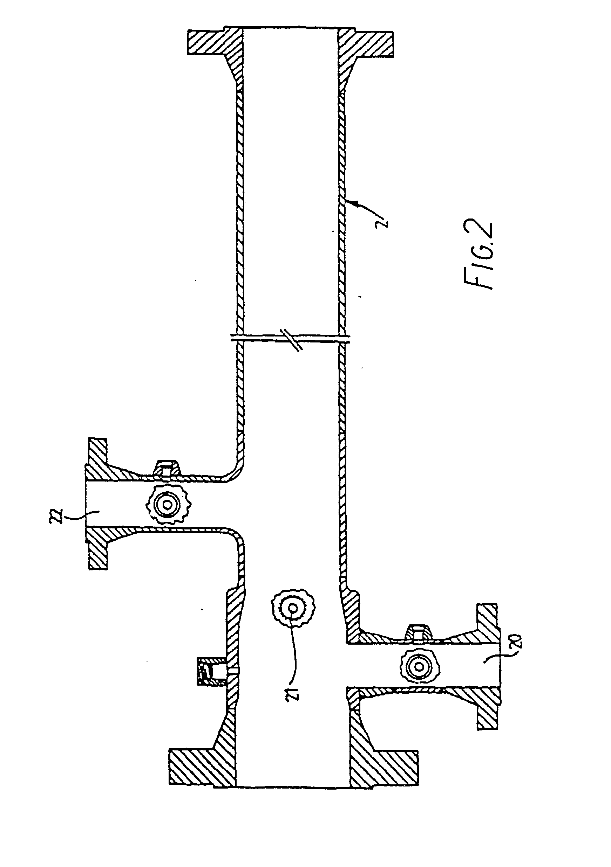

Figure 2 is a sectional side elevation of the outer casing of the apparatus according to the present invention;

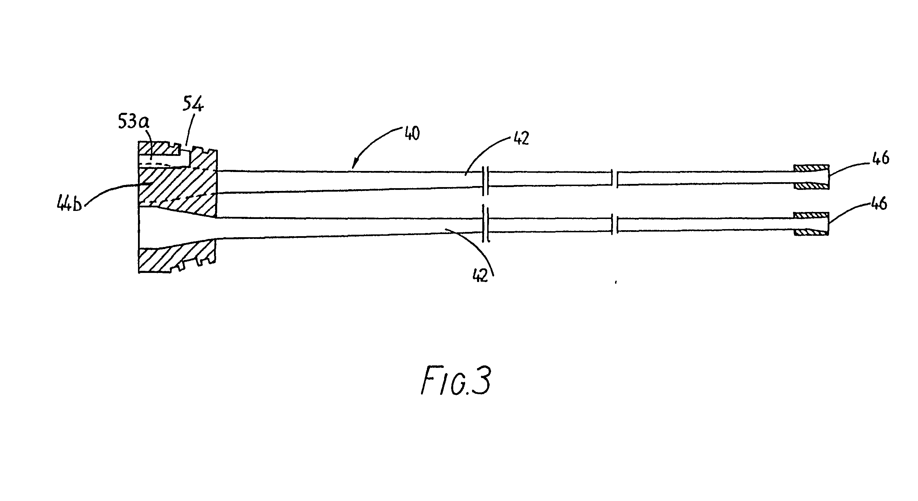

Figure 3 is a sectional side elevation of the block-like element and cyclone separating device;

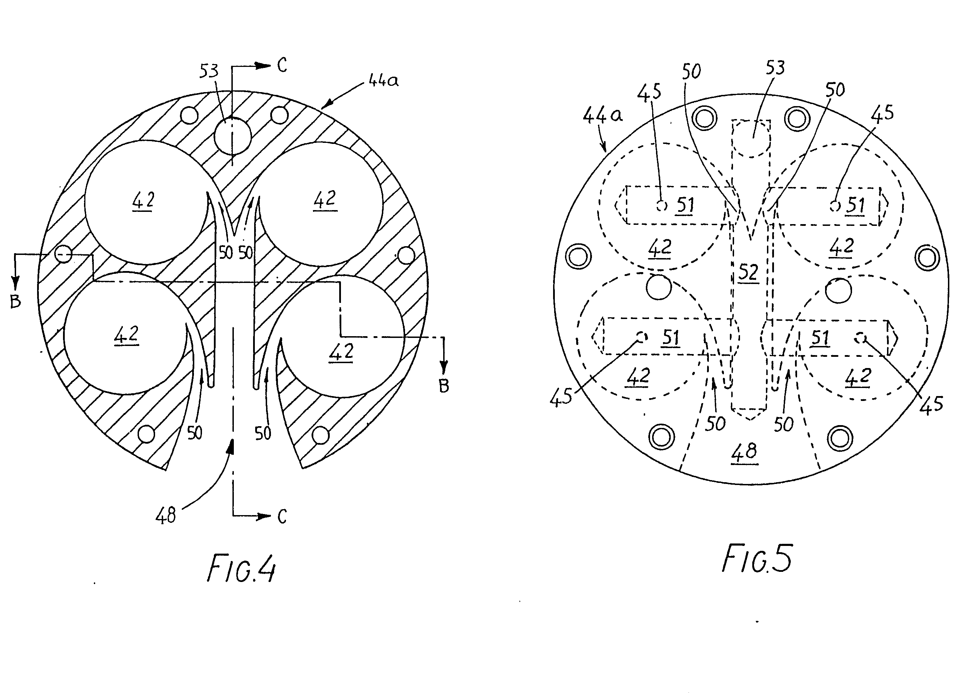

Figure 4 is a sectional view of the head portion of the apparatus on line A—A in Fig. 1;

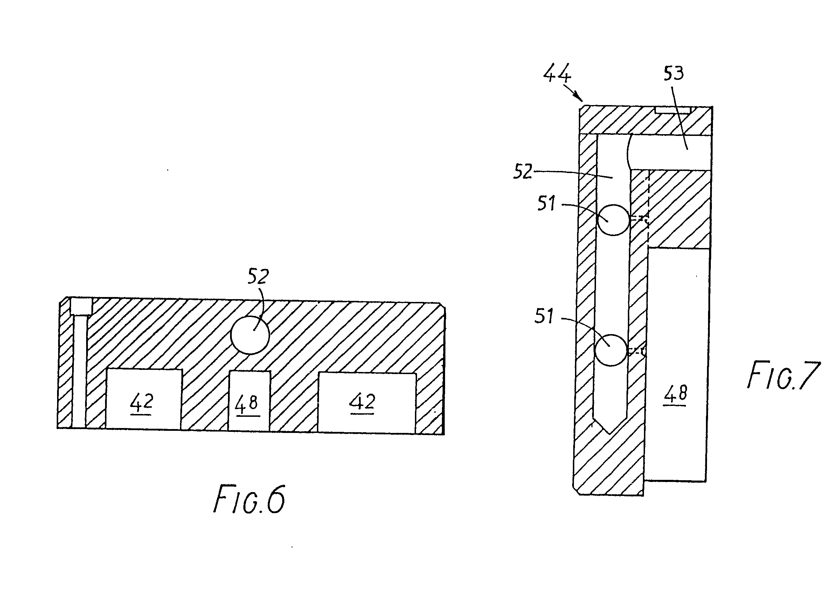

Figure 5 is a top plan view of the head portion of the apparatus;

Figure 6 is a section on line B—B of Fig. 4.

Figure 7 is a section on line C—C of Fig. 4; and

Figure 8 is a schematic view of a system according to the invention.

Referring to the drawings, the apparatus generally indicated at 1 comprises an outer casing 2 having a cavity 4 therein. An intake port 20 is provided through which, in use, the mixture is fed to the apparatus, there further being a first outlet port 21 from which a less dense component can be discharged from the apparatus and a second outlet port 22 from which a more dense component can be discharged from the apparatus. The apparatus further includes a cyclone separating device 40 which comprises a plurality of chambers 42 each chamber having a primary portion which has a greater cross sectional diameter at one end that at its other end and further having an overflow outlet 45 at one end thereof, and an underflow outlet 46 at the other end thereof.

The underflow outlets 46 communicate with the cavity 4, so that the more dense component can pass into the cavity and then be discharged through the second outlet port 22.

As shown the outer casing 2 comprises an elongate tubular member 6, having its ends closed by suitably fitting plugs or caps 10 and 11.

The intake port 20 may be in the form of an intake pipe at towards one end of the elongate member 6 and the second outlet port 22 for discharge of the more dense component of the mixture may be in the form of a pipe also towards the aforementioned one end or spaced therefrom. Preferably the first outlet port 21, from which the less dense component is discharged from the apparatus is also disposed at the aforementioned one end.

As mentioned, the cyclone separating device 40, comprises a plurality of separating chambers 42 which conveniently may be of the type described in any one of applicant's many patents and patent applications relating to cyclone separators for separating liquid mixtures.

The separating device further includes a head portion 44a and a block like element 44b. The head portion 44a is operatively connected to or formed integral with the overflow outlet end of each of the separating chambers 42. The head portion 44a includes a major inlet passage 48 in fluid communication with the intake portion of the apparatus and a plurality of tangentially directed feed inlets 50, communicating with the major inlet passage 48 and directing fluid to respective ones of the separating chambers. In the case shown, where four separating chambers are provided, four feed inlets 50 are provided and desirably these feed inlets 50 are of involute form.

The head portion 44a further includes an outlet passages 51, 52, 53 for collection of the less dense component (e.g. the oil) from the overflow outlets 45 of the separating chambers 42. The outlet passage 53 in the head portion 44a leads into a passage 53a in the block-like element 44b and thence into a peripheral groove 54 in the outer surface of the block like element 44b from which the less dense component is discharged through first outlet port 21. Preferably the groove 54 is disposed near the end of the block-like element 44b, adjacent the under flow outlet end of the separating chambers 42. Although, as shown the overflow outlets of the separating chamber 42 feed into a common outlet passage 52, 53, a number of collecting passages may also be provided for receiving the separated component from the overflow end of each chamber and transferring it to the outlet groove 54.

Preferably the block-like element 44b has a tapered forward end 47a which is adapted to seat in a complementary tapered portion 47b on the outer casing 2. Preferably the groove 54 is provided on this tapered portion and suitable sealing means such as O-rings (not shown) are disposed on either side of the groove 54. As the groove 54 is disposed at the forward end of the block like element 44b, the pressure of the incoming mixture into the head portion 44a, tends to force the tapering sides together to assist in sealing of the block like elements 44b against the casing 2.

As shown in Figure 8, a system for separating multi-phase mixtures comprising an input line through which the multi-phase mixture is delivered, an output line through which at least one of the separated phases of the mixture is discharged and a plurality of apparatus as described above arranged in parallel between the input and output lines.

Preferably, valve means is provided so that each apparatus can be made selectively operable or inoperable.

## Claims

1. Apparatus for separating multi-phase liquid mixtures or at least partially separating a more dense liquid component of the mixture from a less dense liquid component thereof, comprising an outer casing (2) having a capacity (4) therein, an intake port (20) through which, in use, the mixture is fed to the apparatus, a first outlet port (21) from which the less dense liquid component can be discharged from the apparatus and a second outlet port (22) from which the more dense liquid component can be discharged from the apparatus, the apparatus further including a cyclone separating means (40) located within said casing and which comprises a plurality of separating chambers (42), each chamber (42) having a primary portion which has a greater cross-sectional dimension at one end than at its other end and comprising a tangential inlet (50), an overflow outlet (45) at said one end of the separating chamber (42) of greater cross sectional dimension and an under flow outlet (46) at the other end, a block-line element (44b) extending transversely across the casing (2) in sealing relationship with the wall (6) thereof to define the cavity (4), the underflow outlets (46) of the separating chambers (42) communicating with the cavity (4) so that the more dense component of the mixture can pass into the cavity (4) to be discharged through the second outlet port (22), and the over flow outlet (45) from each separator chamber (42) leading to an overflow outlet passage (53a) formed in said block-like element (44b) and thence to the first outlet port (21), said overflow outlet passage (53a) being located in a position between the intake port (20) and the second outlet port (22).

2. Apparatus according to claim 1 including a head portion (44a) operatively connected to each separating chamber (42) and defining the inlet (50) and the overflow outlet (45) for each separating chamber (42) and having a passage or passages (51, 52, 53) leading from the overflow outlet of each (45) separating chamber (42) to the overflow outlet passage (53a), the head portion (44a) also comprising a block-like element and including a major inlet passage (48) in fluid communication with the intake port (20) of the apparatus and a plurality of individual tangentially directed feed inlets (50) communicating with the major inlet passage (48) for directing liquid to respective ones of the separating chambers (42).

3. Apparatus according to any one of claims 1 or claim 2 wherein the outer casing (2) comprises an elongate tubular member (6) having its ends closed by plugs or caps (10, 11).

4. Apparatus according to any one of claims 1 to 3 wherein said intake port (20) is disposed above said block-like element (44b), said second outlet port (22) is disposed below said block-like element and said first outlet port (21) is adjacent said block-like element (44b).

5. Apparatus according to any one of claims 1 to 4 wherein the feed inlets (50) from said head portion (44a) to the separating chambers (42) are of involute form.

6. Apparatus according to any one of claims 1 to 5 wherein the overflow outlet passage (53a), includes a peripheral groove (54) in the outer surface of the block-like element (44b) and communicating with the first outlet port (21).

7. Apparatus according to claim 6 wherein the block-like element (44b) has a tapered forward end (47a) which seats in a complementary tapered portion (47b) on the outer casing (2), the groove (54) being provided on the tapered portion (47a).

8. A system for separating multiphase mixtures comprising an input line through which the multi phase mixture is delivered, an output line through which at least one of the separated phases of the mixture is discharged and a plurality of apparatus according to any preceding claim arranged in parallel between the input and output lines, valve means being provided so that each apparatus can be selectively operable or inoperable.

## Patentansprüche

1. Vorrichtung zur Trennung mehrphasiger flüssiger Mischungen oder zur zumindest teilweisen Trennung einer dichteren Flüssigkeitskomponente der Mischung von einer weniger dichten Flüssigkeitskomponente von dieser mit einem äußeren Gehäuse (2), welches einen Hohlraum (4) darin aufweist, einer Zuführöffnung (20), durch welche im Betrieb die Mischung zu der Vorrichtung zugeführt wird, einer ersten Auslaßöffnung (21), aus welcher die weniger dichte Flüssigkeitskomponente aus der Vorrichtung ausgetragen werden kann, und einer zweiten Auslaßöffnung (22), aus der die dichtere Flüssigkeitskomponente aus der Vorrichtung ausgetragen werden kann, wobei die Vorrichtung weiterhin eine Zyklon-Trenneinrichtung (40) umfaßt, die in dem Gehäuse gelegen ist und eine Vielzahl von Trennkammern (42) umfaßt, wobei jede Kammer (42) einen Primärabschnitt, der an einem Ende eine größere Querschnittsabmessung als an seinem anderen Ende aufweist, und einen tangentialen Einlaß (50), einen Überströmungsauslaß (45) an dem einen Ende der Trennkammer (42) mit größerer Querschnittsabmessung und einen Unterströmungsauslaß (46) an dem anderen Ende umfaßt, wobei sich ein blockähnliches Glied (44b) quer über das Gehäuse (2) in dichtender Beziehung mit der Wand (6) von diesem erstreckt, um den Hohlraum (4) zu begrenzen, die Unterströmungsausgänge (46) der Trennkammern (42) mit dem Hohlraum (4) in Verbindung stehen, so daß die dichtere Komponente der Mischung in den Hohlraum (4) übergehen kann, um durch die zweite Auslaßöffnung (22) ausgetragen zu werden, und der Überströmungsauslaß (45) von jeder Trennkammer (42) zu einem Überströmungsauslaß-Durchgang (53a), der in dem blockähnlichen Element (44b) gebildet ist, und dann zu der ersten Auslaßöffnung (42) führt, wobei der Überströmungsauslaß-Durchgang (53a) in einer Position zwischen der Zuführöffnung (20) und der zweiten Auslaßöffnung (22) gelegen ist.

2. Vorrichtung nach Anspruch 1, die einen Kopfabschnitt (44a) umfaßt, der mit jeder Trennkammer (42) betriebsmäßig verbunden ist und den Einlaß (50) und den Überströmungsauslaß (45) für jede Trennkammer (52) definiert bzw. begrenzt und einen Durchgang oder Durchgänge (51, 52, 53) aufweist, die von dem Überströmungsauslaß jeder (45) Trennkammer (42) zu dem Überströmungsauslaß-Durchgang (53a) führen, wobei der Kopfabschnitt (44a) ebenfalls ein blockähnliches Element umfaßt und einen größeren Einlaßdurchgang (48) in Fluidverbindung mit der Zuführöffnung (20) der Vorrichtung und eine Vielzahl von einzelnen, tangential gerichteten Zuführeinlässen (50), die mit dem größeren Einlaßdurchgang (48) zur Führung der Flüssigkeit zu zugeordneten der Trennkammern (42) in Verbindung steht, umfassen.

3. Vorrichtung nach Anspruch 1 oder 2, bei welcher das äußere Gehäuse (2) ein langgestrecktes rohrförmiges Glied (6) umfaßt, dessen Enden durch Stopfen oder Kappen (10, 11) verschlossen sind.

4. Vorrichtung nach einem der Ansprüche 1 bis 3, bei welcher die Zuführöffnung (20) über dem blockähnlichen Element (44b) angeordnet ist, wobei die zweite Auslaßöffnung (22) unter dem blockähnlichen Element und die erste Auslaßöffnung (21) angrenzend an das blockähnliche Element (44b) angeordnet ist.

5. Vorrichtung nach einem der Ansprüche 1 bis 4, bei welcher die Zuführeinlässe (50) von dem Kopfabschnitt (44a) zu den Trennkammern (42) eine Involutenform aufweisen.

6. Vorrichtung nach einem der Ansprüche 1 bis 5, bei welcher der Überströmungsauslaßdurchgang (53a) eine Umfangsnut (54) in der äußeren Oberfläche des blockähnlichen Elementes (44b) und in Verbindung mit der ersten Auslaßöffnung (21) umfaßt.

7. Vorrichtung nach Anspruch 6, bei welcher das blockähnliche Element (44b) ein kegelstumpfförmig verjüngtes vorderes Ende (47a) aufweist, welches in einem komplementären kegelstumpfförmig verjüngten Abschnitt (47b) an dem äußeren Gehäuse (2) sitzt, wobei die Nut (54) an dem kegelstumpfförmig verjüngten Teil (47a) vorgesehen ist.

8. System zur Trennung mehrphasiger Mischungen mit einer Eingangsleitung, durch welche die mehrphasige Mischung zugeführt wird, einer Ausgangsleitung, durch die zumindest eine der getrennten Phasen der Mischung ausgetragen wird, und einer Vielzahl von Vorrichtungen nach einem der vorhergehenden Ansprüche, die in paralleler Anordnung zwischen der Eingangsleitung und der Ausgangsleitung angeordnet sind, wobei Ventileinrichtungen vorgesehen sind, so daß jede Vorrichtung selektiv in Betrieb oder außer Betrieb sein kann.

**Revendications**

1. Appareil de séparation de mélanges liquides à plusieurs phases ou de séparation au moins partielle d'un constituant liquide relativement dense du mélange d'un constituant liquide moins dense, comprenant un boîtier externe (2) ayant une cavité (4) à l'intérieur, un orifice d'admission (20) par lequel le mélange est transmis à l'appareil pendant l'utilisation, un premier orifice de sortie (21) à partir duquel le constituant liquide le moins dense peut être évacué de l'appareil et un second orifice de sortie (22) par lequel le constituant liquide relativement dense peut être évacué de l'appareil, l'appareil comprenant en outre un dispositif (40) de séparation à cyclone placé à l'intérieur du boîtier et qui comporte plusieurs chambres de séparation (42), chaque chambre (42) ayant une partie primaire qui a, en coupe, une dimension plus grande à une première extrémité qu'à l'autre extrémité et comprenant une entrée tangentielle (50), une sortie de débordement (45) placée à la première extrémité de la chambre de séparation (42) qui a, en coupe, une dimension relativement grande, et une sortie par-dessous (46) placée à l'autre extrémité, un élément (44b) analogue à un bloc disposé transversalement dans le boîtier (2) en coopération étanche avec la paroi (6) de celui-ci afin que la cavité (4) soit délimitée, les sorties disposées par-dessous (46) les chambres de séparation (42) communiquant avec la cavité (4) afin que le constituant relativement dense du mélange puisse passer dans la cavité (4) pour être évacué par le second orifice de sortie (22), et la sortie de débordement (45) de chaque chambre de séparation (42) débouchant dans un passage de sortie de débordement (53a) formé dans l'élément analogue à un bloc (44b) puis vers le premier orifice de sortie (21), le passage de sortie de débordement (53a) étant dans une position comprise entre celle de l'orifice d'admission (20) et celle du second orifice de sortie (22).

2. Appareil selon la revendication 1, comprenant une partie de tête (44a) raccordée à chaque chambre de séparation (42) pendant le fonctionnement, délimitant l'entrée (50) et la sortie de débordement (45) de chaque chambre de séparation (42) et ayant un ou plusieurs passages (51, 52, 53) partant de la sortie de débordement de chaque (45) chambre de séparation (42) vers le passage (53a) de sortie de débordement, la partie de tête (44a) comprenant aussi un élément analogue à un bloc et comportant un passage principal d'entrée (48) communiquant avec l'orifice d'admission (20) de l'appareil en permettant la circulation du fluide, et plusieurs entrées individuelles (50) d'alimentation, dirigées tangentiellement, et communiquant avec le passage principal d'entrée (48) afin que le liquide soit dirigé vers les chambres respectives de séparation (42).

3. Appareil selon l'une des revendications 1 et 2, dans lequel le boîtier externe (2) comporte un organe tubulaire allongé (6) dont les extrémités sont fermées par des bouchons ou capuchons (10, 11).

4. Appareil selon l'une quelconque des revendications 1 à 3, dans lequel l'orifice d'admission (20) est placé au-dessus de l'élément analogue à un bloc (44b), le second orifice de sortie (22) est disposé au-dessous de l'élément analogue à un bloc, et le premier orifice de sortie (21) est adjacent à l'élément analogue à un bloc (44b).

5. Appareil selon l'une quelconque des revendications 1 à 4, dans lequel les entrées d'alimentation (50) allant de la partie de tête (44a) aux chambres de séparation (42) ont une forme de développante.

6. Appareil selon l'une quelconque des revendications 1 à 5, dans lequel le passage de sortie de débordement (53a) a une gorge périphérique (54) formée à la surface externe de l'élément analogue à un bloc (44b) et communiquant avec le premier orifice de sortie (21).

7. Appareil selon la revendication 6, dans lequel l'élément analogue à un bloc (44b) a une extrémité avant (47a) de dimension variant progressivement qui se loge dans une partie complémentaire (47b) de dimension variant progressivement formée sur le boîtier externe (2), la gorge (54) étant formée sur la partie de dimension variant progressivement (47a).

8. Ensemble de séparation de mélanges à plusieurs phases, comprenant une canalisation d'entrée par laquelle le mélange à plusieurs phases est transmis, une canalisation de sortie par laquelle l'une au moins des phases séparées du mélange est évacuée, et plusieurs appareils selon l'une quelconque des revendications précédentes, disposés en parallèle entre les canalisations d'entrée et de sortie, des soupapes étant disposées afin que chaque appareil puisse être sélectivement mis en fonctionnement ou non.

A

22

52
53
51  53a
54  44b
10

1

44a
42
46

42
46

40
6
4
2

11

47a
48  47b
21
51

20

A

*FIG 1*

FIG.2

2

FIG.3

EP 0 256 014 B1

Fig.5

Fig.4

4

Fig.7

53
44
52
51
51
48

Fig.6

52
42
48
42